# FASCICULE DE BREVET EUROPEEN

(11) **EP 2 236 038 B1**
(45) Date de publication et mention de la délivrance du brevet: **16.09.2015**
(21) Numéro de dépôt: 10158302.9
(22) Date de dépôt: 30.03.2010
(51) Int. Cl.: A21B 1/26

(54) **Four de boulangerie-pâtisserie comprenant une enceinte verticale; un échangeur à combustion**
Gargerät mit Wärmetauscher
Cooking oven with a heat exchanger

(30) Priorité: 03.04.2009 FR 0952193
(43) Date de publication de la demande: 06.10.2010
(73) Titulaire: Eurofours, 59144 Gommegnies (FR)
(72) Inventeur: Lemoine, Jérôme, 59460, Jeumont (FR); Lancelot, Pierre, 7387, Angreau (BE); Airoldi, Frédéric, 51210, Le Vezier (FR)
(74) Mandataire: Balesta, Pierre

(56) Documents cités:
- EP-A- 1 529 441
- EP-A- 1 843 101
- EP-A2- 1 310 742
- EP-A2- 1 721 525
- DE-U1- 9 416 205
- US-A- 4 986 253
- US-A- 5 165 889
- US-A- 5 385 137

## Description

La présente invention est relative à un four de boulangerie-pâtisserie, notamment pour la cuisson du pain ou de viennoiseries, un tel four étant alimenté par une source de combustion telle que du gaz voire du fioul.

De manière connue, un tel four comprend une enceinte verticale, ladite enceinte permettant notamment la réception de chariots sur lesquels sont disposés les pains ou viennoiseries à cuire. Le four comprend en outre un échangeur à combustion alimenté par une source de combustion telle que du gaz voire du fioul, et des moyens de circulation de l'air, lesquels sont agencés pour aspirer l'air contenu dans l'enceinte puis réinjecter cet air dans ladite enceinte en le réchauffant au préalable au moyen de l'échangeur. Ces moyens de circulation comprennent une ou plusieurs turbines qui sont agencées dans l'arrière-fond de l'enceinte, tandis que l'échangeur comprend notamment un foyer vertical qui est agencé face aux dites turbines.

Une telle conception de four boulangerie pâtisserie se retrouve par exemple dans le document US-5.165.889 selon lequel le foyer comprenant trois portions principales tubulaires disposées verticalement, deux latérales et une centrale, les extrémités inférieures des deux portions tubulaires latérales étant raccordées entre elles au moyen d'une portion tubulaire horizontale et l'extrémité supérieure de l'une des portions tubulaires latérales étant raccordée à l'extrémité supérieure de la portion tubulaire centrale au moyen d'une seconde portion tubulaire horizontale, l'ensemble présentant plus ou moins une forme de trombone. L'extrémité supérieure libre de l'autre des portions tubulaires latérales est raccordée à un brûleur, tandis que la portion tubulaire centrale comprend des orifices débouchant en vis-à-vis des turbines, face auxquelles ledit foyer est agencé.

Un inconvénient majeur des fours de boulangerie-pâtisserie existants actuellement, tel que celui décrit dans le document US-5.165.889, est de nécessiter une accessibilité par l'extérieur, sur l'arrière et éventuellement sur les côtés latéraux de l'enceinte afin de permettre la réalisation des opérations de maintenance sur le four, notamment les opérations de maintenance de la turbine et des moyens de circulation de l'air.

En effet, l'échangeur disposé face aux turbines dans l'arrière fond de l'enceinte occupe toute la largeur de l'enceinte, ce qui empêche tout accès aux dites turbines, voire aux autres éléments de four, tels que les capteurs et organes de commande pouvant se trouver dans l'arrière fond du four. Cela a en outre pour conséquence de nécessiter la mise en place du four de boulangerie-pâtisserie dans un local permettant l'accès à la paroi arrière et aux parois latérales en sorte de pouvoir effectuer les éventuelles opérations de maintenance. Un tel four est pour cela positionné à l'intérieur du local en occupant un volume conséquent.

En outre, selon ce document US-5.165.889, un inconvénient complémentaire est d'éjecter les fumées de combustion que contient cet échangeur dans les turbines, ces fumées entrant en contact avec l'air contenu dans la chambre de cuisson du fait d'un transfert de chaleur direct au moyen des orifices débouchant sur la portion tubulaire centrale du foyer.

On connaît aussi le document EP 1 310 742 qui divulgue un four de boulangerie comprenant une enceinte, un échangeur à combustion et un ventilateur.

On connaît également le document US-5.385.137, qui divulgue un four de boulangerie comprenant un échangeur qui comporte un foyer présentant la forme d'un U dont une extrémité supérieure d'une première portion tubulaire verticale du U est raccordée à un bruleur et une seconde extrémité supérieure d'une seconde portion tubulaire verticale du U est raccordée à un système d'évacuation des fumées. En outre, ce foyer en forme de U est composé de plusieurs portions tubulaires fixées entre elles par des moyens de fixation amovibles permettant le retrait d'une seule portion tubulaire du foyer afin de faciliter les opérations de maintenance sur le four et permettre le retrait d'une seule partie du foyer.

La présente invention vise à optimiser la conception de l'échangeur d'un four de boulangerie pâtisserie afin de pallier les inconvénients rencontrés ci-dessus avec les fours tels que celui décrit dans le document US-5.165.889, la conception de l'échangeur objet de la présente invention, d'une part, favorisant l'échange thermique de chaleur de l'échangeur vers l'air se trouvant dans le fond de l'enceinte sans dégagement de fumées, cet air réchauffé étant aspiré par les turbines puis refoulé à l'intérieur de l'enceinte et, d'autre part, facilitant les opérations de maintenance sur le four de boulangerie pâtisserie.

A cet effet, l'invention concerne un four de boulangerie-pâtisserie comprenant une enceinte verticale, un échangeur à combustion et des moyens de circulation de l'air comprenant au moins une turbine, de préférence quatre turbines, lesdits moyens de circulation de l'air étant configurés pour aspirer l'air contenu dans l'enceinte, cet air aspiré traversant l'échangeur afin d'être réchauffé avant son passage dans ladite au moins une turbine puis son refoulement par lesdits moyens de circulation de l'air dans ladite enceinte. Ainsi, l'air réchauffé est brassé ou mélangé par lesdites turbines avant d'être refoulé, ce qui assure une température homogène de l'air réchauffé réinjecté dans l'enceinte.

En outre, selon l'invention, l'échangeur comprend un foyer agencé verticalement devant ladite au moins une turbine, de préférence quatre turbines agencés verticalement les unes au dessus des autres et des tubes d'échange de chaleur répartis verticalement sur les côtés latéraux du foyer en sorte de permettre le retrait de ce foyer, ce qui permet le dégagement du foyer par rapport auxdits tubes d'échange de chaleur. Par ailleurs, l'échangeur comprend un collecteur de répartition configuré pour distribuer la chaleur du foyer vers les tubes d'échange de chaleur, ledit collecteur de répartition étant raccordé aux premières extrémités desdits tubes d'échange de chaleur, des premiers moyens de connexion amovibles étant agencés entre le collecteur de répartition et une première extrémité du foyer. De même, l'échangeur comprend un brûleur agencé à une seconde extrémité du foyer, des seconds moyens de connexions amovibles étant agencés entre le brûleur et la seconde extrémité du foyer. En outre, l'échangeur comprend un collecteur d'évacuation raccordé aux secondes extrémités des tubes d'échange de chaleur et à une cheminée d'extraction de fumées, hors de l'enceinte, émises par le brûleur.

Cette conception présente pour avantage de pouvoir extraire le foyer qui constitue une partie conséquente de l'échangeur et occupe la quasi-totalité de la largeur de l'enceinte, l'extraction du foyer permettant l'accès aux turbines devant lesquelles ledit foyer est agencé. Cette extraction du foyer est en outre rendue possible de par la présence des tubes d'échange de chaleur verticaux disposés en position écartée sur les côtés latéraux du foyer en sorte de permettre ladite extraction puis l'accès notamment aux turbines, voire l'accès aux autres éléments du four disposés dans l'arrière fond de l'enceinte, toutes les opérations pouvant être réalisées depuis l'intérieur de l'enceinte du four. Cela présente en outre pour avantage de pouvoir encastrer le four de boulangerie pâtisserie directement dans les parois murales d'un bâtiment comprenant une zone d'encastrement à cet effet, sans nécessiter de déplacer le four pour les opérations de maintenance, ce qui par conséquent libère de l'espace dans la pièce où se situe ledit four.

Par ailleurs, la présence des tubes d'échange favorisent le transfert technique de l'échangeur vers l'air avant son aspiration par les turbines puis son refoulement dans l'enceinte, cette optimisation de l'échange thermique permettant d'optimiser le réchauffement de l'air au moyen d'un chauffage indirect, c'est-à-dire sans nécessiter d'injecter la chaleur provenant directement du foyer et émise par le brûleur, tel que cela est prévu dans le document US-5.165.889. On évite ainsi le mélange des fumées de combustion avec l'air contenu dans l'enceinte contrairement au document US-5.165.889.

Selon l'invention, les premiers moyens de connexion amovibles comportent un premier élément de jonction configuré sur le collecteur de répartition pour assurer la continuité avec la première extrémité du foyer et, un premier collier de serrage muni de moyens d'étanchéité et agencé entre le premier élément de jonction et la première extrémité du foyer.

De même, selon l'invention, les seconds moyens de connexion amovibles comportent un second élément de jonction configuré pour recevoir le bruleur et pour assurer la continuité avec la seconde extrémité du foyer et, un second collier de serrage muni de moyens d'étanchéité et agencé entre le second élément de jonction et la seconde extrémité du foyer.

Ainsi, le retrait du foyer est réalisé en desserrant, dans un premier temps, les premier et second colliers de serrage puis en coulissant lesdits colliers desserrés sur le foyer voire sur les premiers et seconds éléments de jonction, ce qui permet d'extraire ledit foyer. Inversement la mise en place du foyer s'effectue en positionnant, dans un premier temps, les première et seconde extrémités dudit foyer dans la continuité respectivement du premier et second éléments de jonction puis, en positionnant lesdits second et premier colliers de serrage dans les zones de jonction entre la première extrémité du foyer et le premier élément de jonction, respectivement la seconde extrémité du foyer et le second élément de jonction, le serrage des colliers permettant de maintenir assemblés le foyer avec les éléments de jonction, tandis que les moyens d'étanchéité assurent une étanchéité dans les zones de jonction lors du serrage, évitant tout dégagement éventuel de fumées dans l'enceinte.

En outre, la présence du second élément de jonction a pour avantage de pouvoir dégager le foyer malgré la présence du brûleur, lequel reste solidaire dudit second élément de jonction lors du retrait dudit foyer.

De manière préférentielle, le second élément de jonction est configuré sur le collecteur d'évacuation. Cela facilite la mise en place des éléments lors de la conception du four, voire leur retrait en une seule opération en cas de nécessité, lors des opérations de maintenance. On peut toutefois envisager que ce second élément de jonction et que ce collecteur d'évacuation soient indépendants l'un de l'autre.

Selon l'invention, l'enceinte comprend une partie inférieure et une partie supérieure. De manière préférentielle, le collecteur de répartition est agencé en partie inférieure de l'enceinte et le collecteur d'évacuation et le brûleur sont agencés en partie supérieure de l'enceinte. On pourrait toutefois envisager une variante de conception selon laquelle les collecteurs de répartition et d'évacuation, ainsi que le brûleur, seraient inversés.

De manière préférentielle, quatre tubes d'échange de chaleur sont agencés de chaque côté latéral du foyer. On peut prévoir toutefois un nombre plus important de tubes de chaleur de chaque côté latéral du foyer, par exemple pour favoriser l'échange thermique vers l'air dans l'enceinte afin de le réchauffer avant d'être brassé puis réinjecté dans ladite enceinte. Bien entendu, la section des tubes d'échange de chaleur pourra être réduite lors d'une augmentation du nombre de tubes, afin de limiter leur encombrement et de garantir le retrait du foyer, autour duquel lesdits tubes sont disposés sur les côtés latéraux.

De manière préférentielle, le brûleur est configuré pour être alimenté par une source de combustion du type gaz ou fioul. Toute autre source de combustion reste toutefois envisageable.

Selon l'invention, les moyens de circulation de l'air comprennent une double-paroi démontable comportant une paroi externe et une paroi interne. La paroi externe est constituée d'un côté arrière externe et de deux côtés latéraux externes. De même, la paroi interne est constituée d'un côté arrière interne et de deux côtés latéraux internes. Le côté arrière interne est muni d'au moins un orifice configuré pour permettre le raccordement de la au moins une turbine qui est logée entre le côté arrière externe et le côté arrière interne. De préférence, quatre orifices sont agencés l'un au dessus des autres, sur le côté arrière interne auquel sont raccordées respectivement quatre turbines. En outre, les côtés latéraux internes sont munis de perforations permettant le passage de l'air réchauffé et réinjecté dans l'enceinte du four.

Selon l'invention, le collecteur de répartition comprend un déflecteur de répartition de fumées dans les tubes d'échange de chaleur disposés de chaque côté latéral du foyer. Cela favorise une répartition homogène de la chaleur de combustion dans les tubes d'échange de chaleur.

Selon l'invention, le foyer comprend au moins une poignée de manipulation.

Ainsi, la présence des tubes d'échange sur les côtés latéraux du foyer permet de pouvoir réaliser le retrait du foyer puis d'accéder sans aucune gêne aux éléments du four disposés dans l'arrière fond de l'enceinte, lorsque ledit foyer est retiré. En outre, la présence des tubes d'échange de chaleur sur les côtés latéraux du foyer, et notamment en partie antérieure de la turbine permet dans un premier temps d'effectuer le réchauffement de l'air passant au travers de l'échangeur, cet air réchauffé étant ensuite brassé par les turbines pour être réinjecté dans l'enceinte, le brassage après le réchauffement de l'air assurant une homogénéité de la température de l'air réinjecté. L'échange de chaleur est en outre optimisé sans nécessiter de dégagement de fumées dans l'enceinte du four.

Les caractéristiques et avantages de la présente invention apparaîtront à la lecture de la description suivante d'un mode préférentiel de réalisation du four de boulangerie-pâtisserie, lequel s'appuie sur des figures parmi lesquelles :
- la figure 1 illustre le four de boulangerie-pâtisserie en perspective, la porte du four étant ouverte permettant la visualisation de l'échangeur à l'intérieur de l'enceinte ;
- la figure 2 illustre une vue en coupe et de côté du four selon la figure 1 ;
- la figure 3 illustre une vue de dessus en coupe du four ;
- la figure 4 illustre en perspective l'échangeur selon le mode préférentiel de réalisation du four illustré en figure 1 ;
- la figure 5 illustre l'échangeur en perspective, le foyer étant retiré ;
- la figure 6 illustre le foyer de l'échangeur.

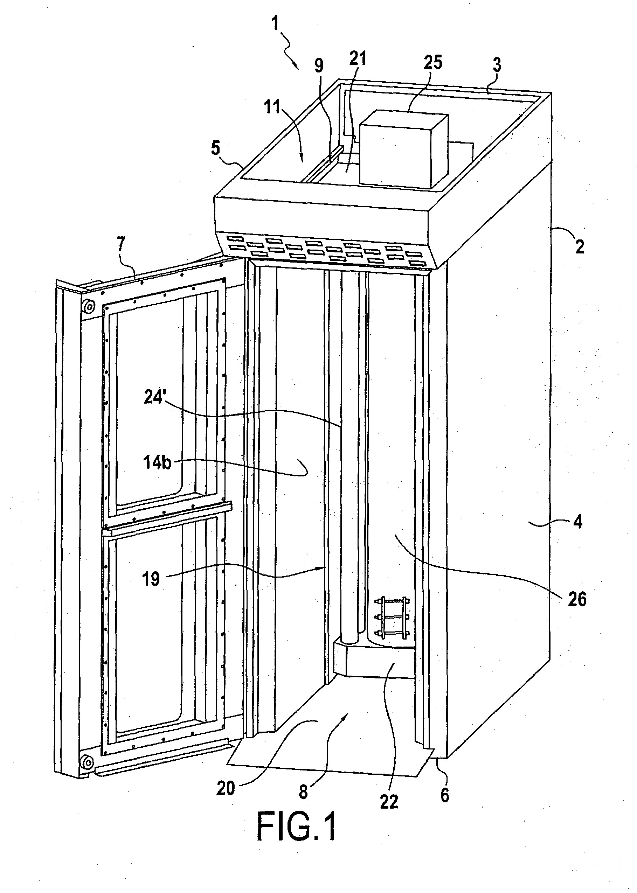

Tel qu'illustré en figure 1, le four 1 de boulangerie-pâtisserie comprend un côté arrière 2, un côté supérieur 3, deux côtés latéraux 4,5 et une base 6 constituant l'ossature du four, lequel est fermé en partie avant par une porte 7 comprenant notamment des moyens de commande et de régulation du four.

De préférence, le côté arrière 2 et le côté supérieur 3 seront ouverts, et les côtés latéraux 4,5 seront fermés par des parois, tel qu'illustré en figure 1.

Tel qu'illustré sur les figures 1 à 3, le four 1 comprend une enceinte 8 qui est délimitée par une double paroi 9. La paroi externe 10 de cette double paroi 9 comprend un côté arrière externe 13a et deux côtés latéraux externes 14a,15a permettant de séparer physiquement et d'isoler ladite enceinte 8 par rapport à une zone externe 11 dans laquelle sont logés notamment les composants électroniques du four permettant la commande et la régulation de celui-ci. La paroi interne 12 de cette double paroi 9 comprend un côté arrière interne 13b et deux côtés latéraux internes 14b,15b tels qu'illustrés sur les figures 1 à 3. Cette double paroi permet de constituer une zone de circulation 16 de l'air.

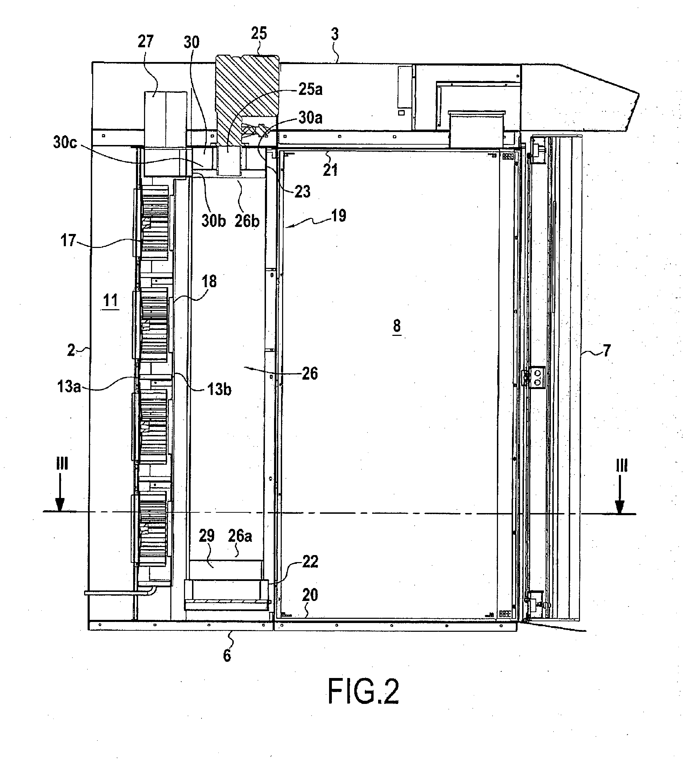

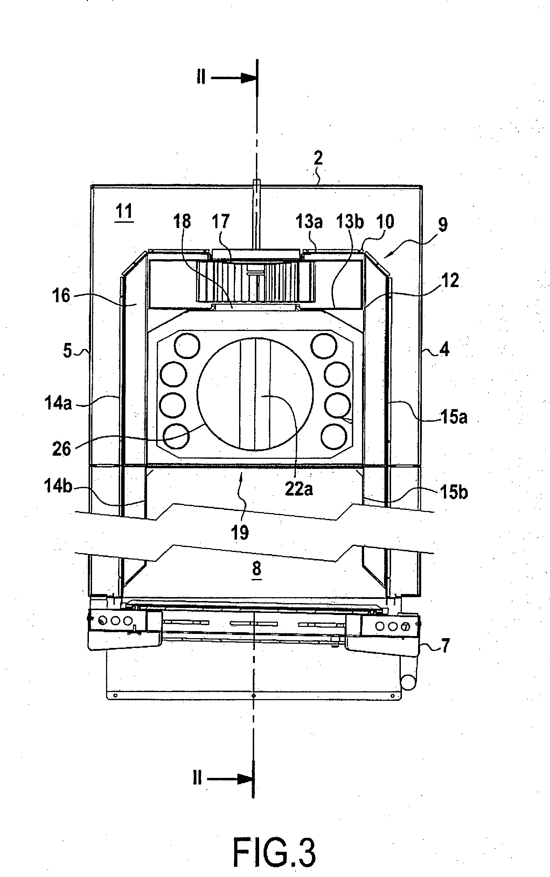

Tel qu'illustré sur les figures 2 et 3, le four 1 comprend une pluralité de turbines 17, de préférence au nombre de quatre, ces turbines 17 étant logées dans l'arrière fond de la double paroi 9 entre le côté arrière externe 13a et le côté arrière interne 13b. Le côté arrière interne 13b de la paroi interne 12 comprend des orifices 18, au nombre de quatre, sur lesquels sont raccordées les turbines 17, lesquels permettent lorsque les turbines fonctionnent d'aspirer l'air contenu dans l'enceinte 8. En outre, les côtés latéraux internes 14b,15b de la paroi interne comprennent des perforations ce qui permet, lorsque les turbines 17 fonctionnent, de faire circuler l'air dans la zone de circulation 16 et de réinjecter l'air dans l'enceinte 8 en passant au travers des perforations sur ces côtés latéraux internes 14b,15b.

Ces perforations sur les côtés latéraux internes 14b,15b sont notamment disposées en partie avant dans la zone où sont susceptibles d'être logés les produits alimentaires du type pain, ou viennoiseries, à l'intérieur de l'enceinte 8.

Tel qu'illustré sur les figures 1 à 5, le four 1 comprend un échangeur 19 disposé face aux côtés arrières internes 13b de la paroi interne 12 en sorte que l'air aspiré par les turbines 17 soit au préalable réchauffé par cet échangeur 19, ledit air étant ensuite brassé puis réinjecté dans l'enceinte 8 dans la zone de réception des produits alimentaires à cuire.

Tel qu'illustré sur les figures 1 et 2, cet échangeur 19 s'étend verticalement sur toute la hauteur dans l'enceinte 8, ses extrémités inférieure et supérieure étant respectivement assujetties à la base 20 et au plafond 21 dans l'enceinte 8.

L'échangeur 19 comprend un collecteur bas 22 constituant l'extrémité de cet échangeur inférieur et un collecteur haut 23 constituant l'extrémité supérieure de cet échangeur.

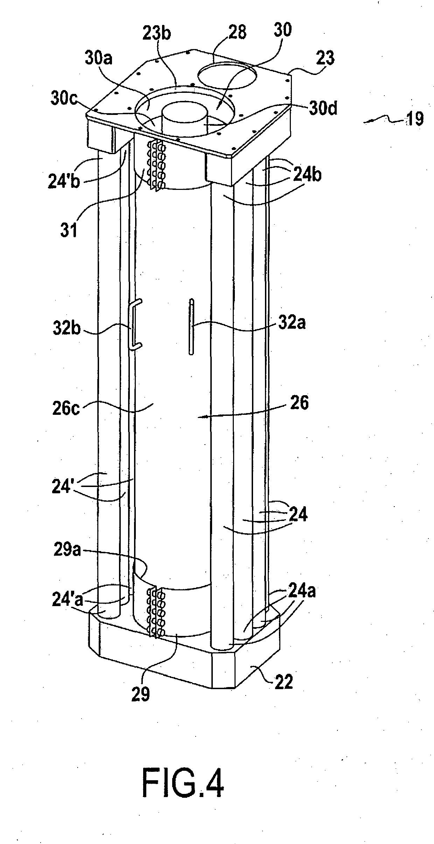

Tel qu'illustré sur les figures 4 à 6, l'échangeur 19 comprend, de manière préférentielle, huit tubes d'échange 24,24' s'étendant verticalement depuis le collecteur bas 22 jusqu'au collecteur haut 23. Le collecteur bas 22 est un collecteur de répartition, permettant de répartir uniformément la chaleur émise par la flamme du brûleur 25 illustré en figures 1 et 2. Ce brûleur 25 est disposé en partie supérieure de l'échangeur 19 et il est raccordé sur un foyer 26. Le brûleur 25 émet une flamme se propageant vers le bas, la pression permettant de propager la chaleur vers le bas à l'intérieur du foyer 26, dont l'extrémité inférieure 26a est raccordée au collecteur bas 22, ce qui permet de propager la chaleur à l'intérieur du collecteur bas 22 avec une répartition uniforme de chaque côté latéral, cette répartition étant obtenue au moyen d'un déflecteur 22a de répartition de fumée illustré en figure 3, lesdites fumées se propageant ensuite dans les tubes d'échange 24,24', depuis leurs extrémités inférieures 24a,24'a raccordées sur le collecteur bas 22, jusque leurs extrémités supérieures 24b,24'b raccordées sur le collecteur haut 23.

Le collecteur haut 23 est un collecteur d'évacuation permettant l'extraction des fumées par le haut contenues dans les tubes d'échange 24,24', le collecteur haut 23 comprenant une cheminée 27, telle qu'illustrée en figure 2, raccordée à un orifice d'évacuation 28 sur ledit collecteur haut 23, tel qu'illustré en figure 4.

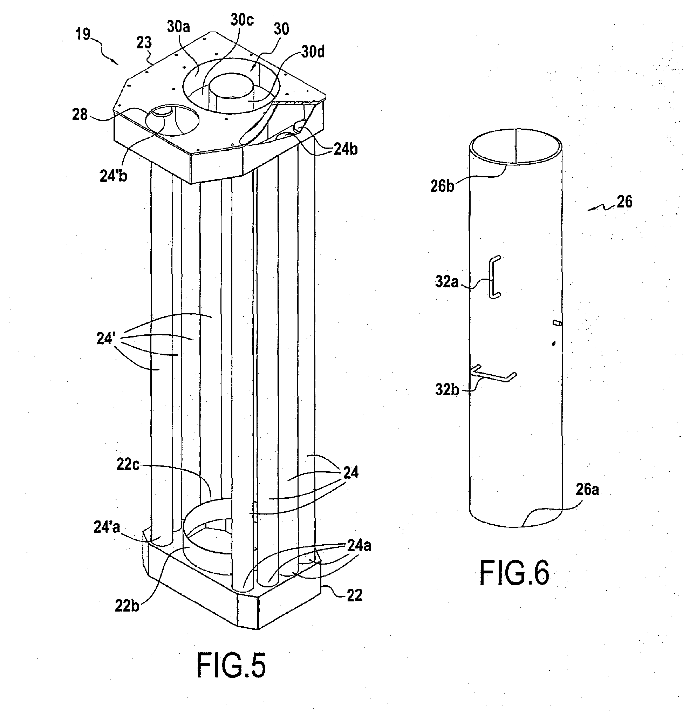

Tel qu'illustré sur les figures 5 et 6, le collecteur bas 22 comprend un élément de jonction 22b qui communique vers l'intérieur dudit collecteur bas 22, tel qu'illustré en figure 5, cet élément de jonction 22b étant de forme circulaire et présentant un diamètre correspondant au diamètre du foyer 26, également de forme circulaire, tel qu'illustré en figures 4 et 6. Ainsi, l'élément de jonction 22b et l'extrémité inférieure 26a du foyer 26 sont mis bout à bout, dans la continuité, tel qu'illustré en figure 2. Un collier de serrage 29, encore appelé bride de fixation, permet ensuite d'assurer le maintien en position assemblée de l'élément de jonction 22b et de l'extrémité inférieure 26a du foyer 26 disposés bout à bout, dans la continuité. En outre, ce collier de serrage 29 comprend un revêtement intérieur 29a assurant une étanchéité au niveau de la jonction entre l'extrémité 22c, illustrée en figure 5, de l'élément de jonction 22b et l'extrémité inférieure 26a du foyer 26. Ce revêtement intérieur 29a est de préférence un joint de fibre de verre renforcé.

Un second élément de jonction 30, illustré sur les figures 2, 4 et 5, comprend de manière préférentielle une paroi cylindrique externe 30a dont le diamètre correspond au diamètre du foyer 26 également de forme cylindrique, ce qui permet de joindre l'extrémité 30b de cette paroi externe 30a avec l'extrémité supérieure 26b du foyer 26 en les disposant bout à bout, dans la continuité, tel qu'illustré sur la figure 2. Un second collier de serrage 31, de préférence similaire au premier collier de serrage 29, assure l'assemblage entre la paroi externe 30a de l'élément de jonction 30 et l'extrémité supérieure 26b du foyer 26, joints bout à bout. Ce collier de serrage 31 dispose également d'un revêtement interne assurant l'étanchéité au niveau de la jonction de l'extrémité 30b de la paroi externe 30a et de l'extrémité 26b du foyer 26.

Par ailleurs, cet élément de jonction 30 assure la fermeture de l'extrémité supérieure 26b du foyer 26. Pour cela, ledit élément de jonction 30 comprend une paroi cylindrique 30c constituant un capot de fermeture de l'extrémité supérieure 26b du foyer 26. L'élément de jonction 30 comprend en outre une paroi interne cylindrique 30d traversant ledit capot 30c de préférence en son centre, cette paroi interne 30d étant de forme et de dimensions adaptées pour recevoir l'extrémité 25a du brûleur 25, tel qu'illustré sur la figure 2. La longueur de cette paroi interne 30d est dimensionnée en sorte d'assurer un positionnement de l'extrémité 25a du brûleur 25 en dehors de l'extrémité supérieure 26b du foyer 26 afin de permettre son dégagement sans heurter ladite extrémité du brûleur 25.

A ce titre, l'extraction du foyer 26 est assurée en effectuant le desserrage des colliers de serrage 29 et 31, ce qui permet ensuite de coulisser lesdits colliers de serrage 29 et 31 le long de la paroi du cylindre 26c du foyer 26 et ainsi de libérer l'extrémité inférieure 26a et l'extrémité supérieure 26b du foyer 26 vis-à-vis respectivement du premier élément de jonction 22b et du second élément de jonction 30, ledit foyer 26 pouvant alors être extrait par rapport aux autres éléments de l'échangeur 19 qui restent en position à l'intérieur de l'enceinte à laquelle ledit échangeur 19 est assujetti. Afin de faciliter l'extraction du foyer 26, celui-ci comprend de préférence des poignées de manipulation 32a,32b telles qu'illustrées en figure 4 ou, selon une variante, en figure 6, disposées de préférence dans la deuxième moitié supérieure dudit foyer 26 pour des raisons d'ergonomie facilitant la manipulation de ce foyer 26 lors de son extraction.

Par ailleurs, les tubes d'échange 24,24' disposés sur les côtés latéraux de l'échangeur sont espacés d'une distance assurant le retrait du foyer 26. La position latérale permet en outre de dégager le côté arrière de l'échangeur 19 permettant ainsi l'accès notamment aux turbines 17 disposées derrière ledit échangeur 19 dans l'arrière fond de l'enceinte 8.

De manière préférentielle, le second élément de jonction 30 en partie supérieure est assujetti au collecteur haut 23 qui comprend pour cela une ouverture 23b de forme cylindrique et de diamètre correspondant aux parois 30a de l'élément de jonction 30, l'assujettissement de l'élément de jonction 30 au collecteur haut 23 étant par exemple réalisé par soudure ou autres. On peut toutefois concevoir, selon une variante, que cet élément de jonction 30 et ce collecteur haut 23 restent indépendants l'un de l'autre.

De manière préférentielle, le brûleur 25 est alimenté par une source de combustion de type gaz tel que du gaz de ville, du propane, du butane ou autres. On peut toutefois prévoir que cette source de combustion soit du fioul, voire toute autre source de combustion possible.

Selon ce mode préférentiel de conception, le brûleur 25 est disposé en partie supérieure du foyer et permet une propagation de la chaleur de l'extrémité supérieure 26b du foyer 26 vers son extrémité inférieure 26a, ce qui implique le positionnement du collecteur de répartition, dit collecteur bas 22, en partie inférieure et du collecteur d'évacuation, dit collecteur haut 23, en partie supérieure pour permettre la propagation de la chaleur.

On pourrait toutefois envisager selon une variante le positionnement du brûleur 25 en partie inférieure, la flamme assurant la propagation de la chaleur de l'extrémité inférieure 26a du foyer 26 vers son extrémité supérieure 26b, dans quel cas il conviendrait d'inverser la position du collecteur de répartition et du collecteur d'évacuation ainsi que de prévoir une cheminée pour l'évacuation des fumées s'étendant en partie inférieure du four pour son raccordement sur le collecteur d'évacuation, tout en prévoyant des moyens de connexion amovibles selon la présente invention permettant l'extraction du foyer 26, ces moyens de connexion amovibles étant mis en oeuvre par des éléments de jonction et des colliers de serrage similaires au mode préférentiel de réalisation décrit ci-dessus et illustré aux figures 1 à 6.

Bien entendu, d'autres caractéristiques et avantages peuvent être envisagés sans sortir du cadre de la présente invention.

## Revendications

1. Four (1) de boulangerie-pâtisserie comprenant une enceinte (8) verticale, un échangeur (19) à combustion et des moyens de circulation de l'air (9) comprenant au moins une turbine (17), lesdits moyens de circulation de l'air étant configurés pour aspirer l'air contenu dans l'enceinte, cet air aspiré traversant l'échangeur (19) afin d'être réchauffé avant son passage dans ladite au moins une turbine (17) puis son refoulement par lesdits moyens de circulation de l'air dans ladite enceinte (8), l'échangeur (19) comprenant :
- un brûleur (25),
- des tubes d'échange de chaleur (24, 24') répartis verticalement,
- un collecteur de répartition (22) raccordé aux premières extrémités (24a, 24'a) desdits tubes d'échange de chaleur (24, 24'),
- un collecteur d'évacuation (23) raccordé aux secondes extrémités (24b, 24'b) des tubes d'échange de chaleur (24, 24') et à une cheminée (27) d'extraction, hors de l'enceinte (8), de fumées émises par le brûleur (25), et
- un foyer (26) ayant une première (26a) et une seconde (26b) extrémités,
ledit four (1) étant **caractérisé en ce que** :
- le foyer (26) est agencé verticalement devant ladite au moins une turbine (17),
- lesdits tubes d'échange de chaleur (24, 24') sont répartis sur les côtés latéraux du foyer (26) en sorte de permettre le retrait dudit foyer (26)
- ledit collecteur de répartition (22) est configuré pour distribuer la chaleur du foyer vers les tubes d'échange de chaleur (24, 24'),
- ledit brûleur (25) est agencé à la seconde extrémité (26b) du foyer (26),
- le foyer (26) comportant en outre des premiers et seconds moyens de connexion amovibles agencés respectivement entre le collecteur de répartition (22) et la première extrémité (26a) du foyer, et entre le brûleur (25) et la seconde extrémité (26b) du foyer (26).

2. Four (1) selon la revendication **1**, les premiers moyens de connexion amovibles comportant un premier élément de jonction (22b) configuré sur le collecteur de répartition (22) pour assurer la continuité avec la première extrémité (26a) du foyer (26), et un premier collier de serrage (29) muni de moyens d'étanchéité (29c) et agencé entre le premier élément de jonction et la première extrémité du foyer.

3. Four (1) selon la revendication **1*** ou **2**, les seconds moyens de connexion amovibles comportant un second élément de jonction (30) configuré pour recevoir le brûleur (25) et pour assurer la continuité avec la seconde extrémité (26b) du foyer (26), et un second collier de serrage (31) muni de moyens d'étanchéité (31a) et agencé entre le second élément de jonction et la seconde extrémité du foyer.

4. Four (1) selon la revendication **3**, le second élément de jonction (30) étant configuré sur le collecteur d'évacuation (23).

5. Four (1) selon l'une quelconque des revendications **1 à 4**, l'enceinte (8) comprenant une partie inférieure et une partie supérieure, le collecteur de répartition (22) étant agencé en partie inférieure de l'enceinte et le collecteur d'évacuation (23) et le brûleur (25) étant agencés en partie supérieure de l'enceinte.

6. Four (1) selon l'une quelconque des revendications **1 à 5**, quatre tubes d'échange de chaleur (24, 24') étant agencés de chaque côté latéral du foyer (26).

7. Four (1) selon l'une quelconque des revendications **1 à 6**, le brûleur (25) étant alimenté par une source de combustion du type gaz ou fioul.

8. Four (1) selon l'une quelconque des revendications **1 à 7**, les moyens de circulation de l'air comprenant une double-paroi (9) démontable comportant une paroi externe (10) et une paroi interne (12), la paroi externe étant constituée d'un côté arrière externe (13a) et de deux côtés latéraux externes (14a, 15a), la paroi interne étant constituée d'un côté arrière interne (13b) muni d'au moins un orifice (18) et de deux côtés latéraux internes (14b, 15b) munis de perforations, la au moins une turbine (17) étant logée entre le côté arrière externe et le côté arrière interne et raccordé audit au moins un orifice.

9. Four (1) selon la revendication **8**, comprenant quatre turbines, le côté arrière interne (13b) comprenant quatre orifices (18) auxquels sont raccordées respectivement lesdites quatre turbines.

10. Four (1) selon l'une quelconque des revendications **1 à 9**, le collecteur de répartition (22) comprenant un déflecteur (22a) de répartition de fumées dans les tubes d'échange de chaleur (24, 24') disposés de chaque côté latéral du foyer (26).

11. Four (1) selon l'une quelconque des revendications **1 à 10**, le foyer (26) comprenant au moins une poignée de manipulation (32a, 32b).

## Patentansprüche

1. Bäckerei- und Konditoreiofen (1), umfassend einen vertikalen Raum (8), einen Verbrennungsaustauscher (19) und Luftzirkulationsmittel (9), die wenigstens eine Turbine (17) umfassen, wobei die Luftzirkulationsmittel dazu ausgelegt sind, die in dem Raum enthaltene Luft anzusaugen, wobei diese angesaugte Luft den Austauscher (19) durchläuft, um erwärmt zu werden, bevor sie in die wenigstens eine Turbine (17) gelangt, dann durch die Luftzirkulationsmittel in den Raum (8) gefördert wird, wobei der Austauscher (19) umfasst:
- einen Brenner (25),
- vertikal verteilte Wärmetauscherrohre (24, 24'),
- einen Verteilungssammler (22), der mit den ersten Enden (24a, 24'a) der Wärmetauscherrohre (24, 24') verbunden ist,
- einen Abführsammler (23), der mit den zweiten Enden (24b, 24'b) der Wärmetauscherrohre (24, 24') und mit einem Abzug (27) zum Austragen von durch den Brenner (25) abgegebenen Rauchgasen aus dem Raum (8) hinaus verbunden ist, und
- einen Brennraum (26) mit einem ersten (26a) und einem zweiten (26b) Ende,
wobei der Ofen (1) **dadurch gekennzeichnet ist, dass**:
- der Brennraum (26) vertikal vor der wenigstens einen Turbine (17) angeordnet ist,
- die Wärmetauscherrohre (24, 24') auf den Seitenflächen des Brennraums (26) verteilt sind, um das Herausnehmen des Brennraums (26) zu ermöglichen,
- der Verteilungssammler (22) dazu ausgelegt ist, die Wärme des Brennraums zu den Wärmetauscherrohren (24, 24') hin auszugeben,
- der Brenner (25) an dem zweiten Ende (26b) des Brennraums (26) angeordnet ist,
- wobei der Brennraum (26) ferner erste und zweite lösbare Verbindungsmittel umfasst, die zwischen dem Verteilungssammler (22) und dem ersten Ende (26a) des Brennraums bzw. zwischen dem Brenner (25) und dem zweiten Ende (26b) des Brennraums (26) angeordnet sind.

2. Ofen (1) nach Anspruch 1, wobei die ersten lösbaren Verbindungsmittel ein erstes Verbindungselement (22b), das an dem Verteilungssammler (22) ausgestaltet ist, um die Kontinuität mit dem ersten Ende (26a) des Brennraums (26) sicherzustellen, und eine erste Klemmschelle (29), die mit Dichtungsmitteln (29c) ausgestattet und zwischen dem ersten Verbindungselement und dem ersten Ende des Brennraums angeordnet ist, umfassen.

3. Ofen (1) nach Anspruch 1 oder 2, wobei die zweiten lösbaren Verbindungsmittel ein zweites Verbindungselement (30), das dazu ausgestaltet ist, den Brenner (25) aufzunehmen und die Kontinuität mit dem zweiten Ende (26b) des Brennraums (26) sicherzustellen, und eine zweite Klemmschelle (31), die mit Dichtungsmitteln (31 a) ausgestattet und zwischen dem zweiten Verbindungselement und dem zweiten Ende des Brennraums angeordnet ist, umfassen.

4. Ofen (1) nach Anspruch 3, wobei das zweite Verbindungselement (30) an dem Abführsammler (23) ausgestaltet ist.

5. Ofen (1) nach einem der Ansprüche 1 bis 4, wobei der Raum (8) einen unteren Teil und einen oberen Teil umfasst, wobei der Verteilungssammler (22) im unteren Teil des Raumes angeordnet ist und wobei der Abführsammler (23) und der Brenner (25) im oberen Teil des Raumes angeordnet sind.

6. Ofen (1) nach einem der Ansprüche 1 bis 5, wobei vier Wärmetauscherrohre (24, 24') auf jeder Seitenfläche des Brennraums (26) angeordnet sind.

7. Ofen (1) nach einem der Ansprüche 1 bis 6, wobei der Brenner (25) über eine Brennquelle vom Typ Gas oder Heizöl versorgt wird.

8. Ofen (1) nach einem der Ansprüche 1 bis 7, wobei die Luftzirkulationsmittel eine demontierbare Doppelwand (9) mit einer Außenwand (10) und einer Innenwand (12) umfassen, wobei die Außenwand von einer äußeren Rückseite (13a) und von zwei äußeren Seitenflächen (14a, 15a) gebildet ist, wobei die Innenwand von einer inneren Rückseite (13b), die mit wenigstens einer Öffnung (18) versehen ist, und von zwei inneren Seitenflächen (14b, 15b), die mit Lochungen versehen sind, gebildet ist, wobei die wenigstens eine Turbine (17) zwischen der äußeren Rückseite und der inneren Rückseite aufgenommen und mit der wenigstens einen Öffnung verbunden ist.

9. Ofen (1) nach Anspruch 8, umfassend vier Turbinen, wobei die innere Rückseite (13b) vier Öffnungen (18) umfasst, mit denen jeweils die vier Turbinen verbunden sind.

10. Ofen (1) nach einem der Ansprüche 1 bis 9, wobei der Verteilungssammler (22) ein Leitblech (22a) zum Verteilen von Rauchgasen in die auf jeder Seitenfläche des Brennraums (26) angeordneten Wärmetauscherrohre (24, 24') umfasst.

11. Ofen (1) nach einem der Ansprüche 1 bis 10, wobei der Brennraum (26) wenigstens einen Bedienungsgriff (32a, 32b) umfasst.

## Claims

1. A baker's or confectioner's oven (1) comprising a vertical enclosure (8), a combustion heat exchanger (19), and air circulation means (9) including at least one turbine (17), said air circulation means being configured to suck in the air contained in the enclosure, the sucked-in air passing through the heat exchanger (19) in order to be heated prior to passing through said at least one turbine (17) and then being delivered by said air circulation means into said enclosure (8), the heat exchanger (19) comprising:
• a burner (25);
• heat exchange tubes (24, 24') that are vertically distributed;
• a distribution manifold (22) connected to the first ends (24a, 24'a) of said heat exchange tubes (24, 24');
• a discharge manifold (23) connected to the second ends (24b, 24'b) of the heat exchange tubes (24, 24') and to an extraction chimney (27) for taking fumes given off by the burner (25) and extracting them out from the enclosure (8); and
• a hearth (26) having first and second ends (26a, 26b);
said oven (1) being **characterized in that**:
• the hearth (26) is arranged vertically in front of said at least one turbine (17);
• said heat exchange tubes (24, 24') are distributed over the lateral sides of the hearth (26) so as to enable said hearth (26) to be removed;
• said distribution manifold (22) is configured to distribute the heat from the hearth to the heat exchange tubes (24, 24') ;
• said burner (25) is arranged at the second end (26b) of the hearth (26); and
• the hearth (26) further includes first and second removable connection means arranged respectively between the distribution manifold (22) and the first end (26a) of the hearth, and between the burner (25) and the second end (26b) of the hearth (26).

2. An oven (1) according to claim 1, wherein the first removable connection means comprise a first junction element (22b) configured on the distribution manifold (22) to provide continuity with the first end (26a) of the hearth (26), and a first clamping collar (29) provided with sealing means (29c) and arranged between the first junction element and the first end of the hearth.

3. An oven (1) according to claim 1 or claim 2, wherein the second removable connection means comprise a second junction element (30) configured to receive the burner (25) and to provide continuity with the second end (26b) of the hearth (26), and a second clamping collar (31) provided with sealing means (31a) and arranged between the second junction element and the second end of the hearth.

4. An oven (1) according to claim 3, wherein the second junction element (30) is configured on the discharge manifold (23).

5. An oven (1) according to any one of claims 1 to 4, wherein the enclosure (8) has a bottom portion and a top portion, the distribution manifold (22) being arranged in the bottom portion of the enclosure and the discharge manifold (23) and the burner (25) being arranged in the top portion of the enclosure.

6. An oven (1) according to any one of claims 1 to 5, wherein four heat exchange tubes (24, 24') are arranged on each lateral side of the hearth (26).

7. An oven (1) according to any one of claims 1 to 6, wherein the burner (25) is fed with a combustion source of the gas or oil type.

8. An oven (1) according to any one of claims 1 to 7, wherein the air circulation means comprise a removable double-wall (9) having an outer wall (10) and an inner wall (12), the outer wall is constituted by an outer rear side (13a) and two outer lateral sides (14a, 15a), the inner wall being constituted by an inner rear side (13b) provided with at least one orifice (18) and two inner lateral sides (14b, 15b) provided with perforations, and the at least one turbine (17) is housed between the outer rear side and the inner rear side and is connected to said at least one orifice.

9. An oven (1) according to claim 8, having four turbines, wherein the inner rear side (13b) has four orifices (18) that are connected to respective ones of said four turbines.

10. An oven (1) according to any one of claims 1 to 9, wherein the distribution manifold (22) includes a deflector (22a) for distributing the fumes in the heat exchange tubes (24, 24') arranged at each lateral side of the hearth (26).

11. An oven (1) according to any one of claims 1 to 10, wherein the hearth (26) includes at least one handle (32a, 32b) for manipulating it.
